# EUROPÄISCHE PATENTSCHRIFT

(11) **EP 0 570 393 B1**
(45) Veröffentlichungstag und Bekanntmachung des Hinweises auf die Patenterteilung: **07.12.1994**
(21) Anmeldenummer: 92902845.4
(22) Anmeldetag: 22.01.1992
(51) Int. Cl.: B29C 49/42

(54) **BLASFORMMASCHINE MIT ZWEI KALIBRIERSTATIONEN**
BLOW-MOULDING MACHINE WITH TWO CALIBRATION STATIONS
MACHINE A SOUFFLER AVEC DEUX POSTES DE CALIBRAGE

(30) Priorität: 05.02.1991 DE 4103416
(43) Veröffentlichungstag der Anmeldung: 24.11.1993
(73) Patentinhaber: R. Stahl Blasformtechnik GmbH, D-70771 Leinfelden-Echterdingen (DE)
(72) Erfinder: EFFENBERGER, Alfred, D-7024 Filderstadt 4 (DE)
(74) Vertreter: Lutz, Johannes Dieter, Dr.
(86) Internationale Anmeldenummer: EP9200124
(87) Internationale Veröffentlichungsnummer: WO9213703

(56) Entgegenhaltungen:
- DE-A- 3 727 990
- GB-A- 1 172 827
- US-A- 3 767 342
- US-A- 3 794 454
- US-A- 4 124 668
- US-A- 4 290 995
- US-A- 4 459 095
- US-A- 4 552 526

## Beschreibung

Die Erfindung betrifft eine Blasformmaschine mit zwei Kalibrierstationen zwischen denen ein Extruder angeordnet ist, der schlauchförmige Kunststoff-Rohlinge erzeugt, die in alternierender Folge von Blasformen aufgenommen werden und in diesen an den Kalibrierstationen in periodischem Takt zu Formhohlkörpern geblasen werden, wobei die Kalibrierstationen und der Extruder entlang einer vertikalen Längsmittelebene angeordnet sind, entlang welcher die Blasformen zwischen ihrer Blasstation und dem Extruder zur Beschickung mit den Kunststoff-Rohlingen hin- und verfahrbar sind, mit mindestens einer Nachbearbeitungsstation, an der die geblasenen Formhohlkörper einer Nachbearbeitung unterworfen werden und mit einer Transportvorrichtung mittels derer die an den Kalibrierstationen geblasenen Formhohlkörper im Takt der Blaszyklen zu der Nachbearbeitungsstation transportierbar sind, wobei die Transportvorrichtung als eine hin- und herverfahrbare Iransportmaske ausgebildet ist, die zur Aufnahme der Formhohlkörper, die an den Kalibrierstationen bzw. geblasen worden sind, alternierend in Aufnahmeposition bringbar ist und von diesen Positionen aus zu der Nachbearbeitungsstation transportierbar ist, wobei die Transportmaske eine in der Art einer Blasformhälfte gestaltete Halbmaske umfaßt ist, die mindesten eine zu den Kalibrierstationen hin offene Aufnahmeöffnung hat, in der ein eingebrachter Formhohlkörper durch formschlüssigen Eingriff des Öffnungsrandes mit Vorsprüngen oder Einschnürungen des Hohlkörpers vertikal abgestützt und gegen ein Herausfallen aus der Transportmaske gesichert ist.

Eine derartige Blasformmaschine ist Gegenstand der eigenen, älteren, nicht vorveröffentlichten Patentanmeldung P 39 25 859.9 (DE-39 25 859 A1). Bei dieser Blasformmaschine ist, um die an den beiden Kalibrierstationen geblasenen Formhohlkörper entlang einer Transportebene aufeinanderfolgend angeordneten Nachbearbeitungsstationen zuführen zu können, ein Schwenkgreifer vorgesehen, der in periodischer Folge von der einen Kalibrierstation zur ersten Nachbearbeitungsstation, von dieser zur anderen Kalibrierstation und wieder zurück zur ersten Nachbearbeitungsstation schwenkt usw. und dabei jeweils die Formhohlkörper der Nachbearbeitungsstation zustellt, von der aus der Weitertransport der nachbearbeiteten Formhohlkörpe entlang einer Transportebene erfolgt, die rechtwinklig zu der durch die Anordnung der Kalibrierstationen und des Extruders markierten, vertikalen Längsmittelebene der Grundmaschine verläuft.

Durch die der Patentanmeldung P 39 25 859.9 entsprechende Blasformmaschine sollen dem Stand der Technik entsprechenden Blasformmaschinen, bei denen jeder der beiden Kalibrierstationen ein "eigener" Satz von Nachbearbeitungsstationen zugeordnet ist, anhaftende Nachteile vermieden werden, als welche angesehen werden: 1. Großer Raumbedarf entlang derjenigen Ebene(n),
1. Großer Raumbedarf entlang derjenigen Ebene(n), welche durch die Reihenfolge der Nachbearbeitungsstationen markiert ist/sind;
2. hoher technischer Aufwand und damit hohe Herstellungskosten wegen der in Duplizität vorzusehenden Nachbearbeitungsstationen und
3. zusätzlicher Aufwand für Transport- und Umlenkeinrichtungen, mittels derer die fertigen Hohlkörper zu einer gemeinsamen Ausgabestation transportiert werden müssen.

Durch die Blasformmaschine gemäß der älteren Patentanmeldung wird zwar insoweit eine durchaus spürbare Verbesserung gegenüber dem Stand der Technik erzielt, als aufwendige Transporteinrichtungen für das Zusammenführen der an den beiden Kalibrierstationen hergestellten Formhohlkörper entfallen und auch nur ein Satz von Nachbearbeitungsstationen benötigt wird, wodurch sowohl ein diesbezüglicher Raumbedarf reduziert als auch der zur Realisierung der Maschine insgesamt erforderliche technische Aufwand vermindert wird.

Als nachteilig an der Blasformmaschine gemäß der älteren Patentanmeldung muß jedoch angesehen werden, daß auch der Schwenkgreifer einen nicht unerheblichen technischen Aufwand bedingt, und daß auch zeitaufwendige Justierarbeiten hinsichtlich der Anordnung der Nachbearbeitungsstationen und des Schwenkgreifers zueinander erforderlich sind, die auch ein Umrüsten der Maschine erschweren.

Von der Blasformmaschine gemäß der Patentanmeldung P 39 25 859.9 ausgehend, ist es daher Aufgabe der Erfindung, eine solche Maschine, ohne deren günstige funktionelle Eigenschaften zu beeinträchtigen, weiter zu vereinfachen und einfacher justierbar zu gestalten.

Diese Aufgabe wird erfindungsgemäß duch die im Patentanspruch 1 genannten Merkmale gelöst.

Hiernach ist die Transportmaske, mittels derer die an den Kalibrierstationen geblasenen Formhohlkörper zumindest zu der ersten Nachbearbeitungstation transportierbar sind, entlang einer in seitlichem Abstand von der Längsmittelebene der Blasformmaschine und parallel zu dieser Längsmittelebene verlaufenden Transportebene zwischen den Kalibrierstationen gegenüberliegenden Aufnahmepositionen hin- und herverfahrbar. Diese Nachbearbeitungsstationen und gegebenenfalls weitere sind, auf eine der Kalibrierstationen folgend, dieser benachbart angeordnet, derart, daß der Weitertransport in derselben Richtung erfolgt wie die Verschiebungen der Blasformen, die diese zwischen den Kalibrierstationen und dem Extruder erfahren. Die erfindungsgemäße Maschine ist in soweit "linear". Desweiteren sind die die Blasdorne auf- und abverfahrbar tragenden Kalibrierstationen zur Beschickung der Transportmaske mit den an der jeweiligen Kalibrierstation geblasenen Formhohlkörpern rechtwinklig zur Längsmittelebene der Blasformmaschine verfahrbar ausgebildet.

Hierdurch erzielte bauliche Vereinfachungen und betriebstechnisch günstige Eigenschaften der erfindungsgemäßen Blasformmaschine sind zumindest die folgenden:

Im Rahmen der erfindungsgemäßen Blasformmaschine werden zur Beschickung der Transportmaske mit den geblasenen Formhohlkörpern und zu deren Transport zu der bzw. den Nachbearbeitungsstationen lediglich Linearantriebe benötigt, die konstruktiv einfach und daher auch preisgünstig realisierbar sind. Eine mit einem hohen Trägheitsmoment behaftete Schwenkeinrichtung entfällt, desgleichen ein Drehantrieb für die Transportmaske, der bei der Blasformmaschine gemäß der Patentanmeldung P 39 25 859.9 zumindest für den Fall erforderlich ist, daß an deren beiden Kalibrierstationen mit derselben Orientierung entlang der Längsmittelebene der Grundmaschine hergestellte asymetrische Formhohlkörper ebenfalls mit einheitlicher Orientierung den Nachbearbeitungsstationen zuführbar sein sollen. Zwar sind stattdessen bei der erfindungsgemäßen Blasformmaschine Linearantriebe erforderlich, mittels derer die die Blasdorne tragenden Köpfe der Kalibrierstationen rechtwinklig zur Längsmittelebene der Blasformmaschine hin- und herverfahrbar sind, jedoch sind diese Linearantriebe mit vergleichsweise geringem technischem Aufwand realisierbar, da sie, wie schon erwähnt, konstruktiv einfacher sind und zum anderen nur auf relativ kleine Hübe ausgelegt sein müssen. Da die Formhohlkörper im Verlauf ihres Transports mittels der Transportmaske lediglich translatorischen, nicht aber rotatorischen Bewegungen ausgesetzt sind, die zu Fliehkräften führen könnten, kann die Transportmaske lediglich als "Halbmaske" ausgebildet sein, was eine zusätzliche Vereinfachung gegenüber der bei der Blasformmaschine gemäß der älteren Patentanmeldung P 39 25 859.9 benötigten Transportmaske bedeutet, die - wegen der rotatorischen Transportbewegungen - zwei gegeneinander verschiebbare Maskenhälften haben muß, in Analogie zu den beiden Formhälften einer Blasform.

Wenn, wie gemäß Anspruch 2 vorgesehen, die Nachbearbeitungsstationen entlang der Transportebene angeordnet sind, kann die Transportmaske der erfindungsgemäßen Blasformmaschine auch für den Weitertransport der dort bearbeiteten Formhohlkörper mit ausgenutzt werden, dies jedenfalls insoweit, als die Verweilzeiten der Formhohlkörper an den jeweiligen Nachbearbeitungsstationen sehr kurz sind.

Unter diesem Gesichtspunkt ist es besonders vorteilhaft wenn, wie gemäß Anspruch 3 vorgesehen, die erste Nachbearbeitungsstation eine Stanz- und/oder Entbutzungsstation ist, d.h. eine Station, an der ein Nachbearbeitungsvorgang durchgeführt wird, der nur wenige Zehntel-Sekunden dauert.

In diesem Fall ist es besonders vorteilhaft, wenn, wie gemäß Anspruch 4 vorgesehen, die Transportmaske als ein die der Stanzbearbeitung unterworfenen Formhohlkörper während des Stanz- bzw. Entbutzungsvorganges in Position haltendes Widerlager ausgenutzt ist.

In diesem Fall kann die Transportmaske auch dann zum Weitertransport zur nächsten Nachbearbeitungs- oder Prüfstation ausgenutzt werden, wie gemäß Anspruch 5 vorgesehen, sofern es dort einer länger dauernden Ausnutzung der Transportmaske als Widerlager oder Halteelement nicht bedarf, was aber bei üblicher Gestaltung der Nachbearbeitungsstationen auch nicht erforderlich ist.

Durch die Merkmale des Anspruchs 6 ist eine bevorzugte, einfache und funktionell günstige Gestaltung der Aufnahmeöffnungen der Transportmaske angegeben, die einen sicheren Transport der an der jeweiligen Kalibrierstation geblasenen Formhohlkörper zu der bzw. den Nachbearbeitungsstationen gewährleistet, wobei ein zum Zweck der Ausrückbarkeit der Transportmaske aus ihrer Eingriffstellung mit den Formhohlkörpern erforderlicher, kurzhubiger Linearantrieb vorteilhaft in der durch die Merkmale des Anspruchs 7 angegebenen Weise gestaltet sein kann.

Ein solcher - kurzhubiger - Linearantrieb ist in bevorzugter Gestaltung der die Transportmaske umfassenden Transporteinrichtung gemäß Anspruch 8 an einem in Längsrichtung der Blasformmaschine verschiebbaren Führungsblock montiert, dessen gestellfestes Führungselement in bevorzugter Gestaltung mit den Merkmalen des Anspruchs 9 realisiert ist.

In bevorzugter Gestaltung der erfindungsgemäßen Blasmaschine ist der Linearantrieb für die Transportmaske, mittels dessen diese entlang der vertikalen Längsmittelebene der Blasformmaschine verschiebbar ist, als ein mittels eines Elektromotors mit umkehrbarer Drehrichtung antreibbarter Zahnriementrieb ausgebildet, für den durch die Merkmale des Anspruchs 11 eine besonders vorteilhafte, raumsparende Gestaltung angegeben ist.

In der durch die Merkmale des Anspruchs 12 angegebenen Gestaltung der Transportmaske vermittelt diese eine besonders sichere Fixierung der Formhohlkörper während des Transports in den Aufnahmeöffnungen der Transportmaske.

Im übrigen ist aus der GB-A-1172827 noch eine zwangsgeführte, schwenkbare Greifvorrichtung für Spritzlänge mittels Unterdruck bekannt.

Weitere Einzelheiten der Erfindung ergeben sich aus der nachfolgenden Beschreibung eines speziellen Ausführungsbeispiels anhand der Zeichnung. Es zeigen:
- Fig. 1: Eine schematisch vereinfachte Ansicht einer erfindungsgemäßen Blasformmaschine, mit einer parallel zu ihrer vertikalen Längsmittelebene verschiebbaren Transportmaske,
- Fig. 2: die Transportmaske gemäß Figur 1 sowie die zu ihrer Längsführung erforderlichen Führungselemente in einem Schnitt längs der Linie II-II der Figur 1,
- Fig. 3: eine vereinfachte, schematische Draufsicht der Blasformmaschine gemäß Figur 1 zur Erläuterung ihrer Funktion und
- Fig. 4: eine Teilansicht der Blasformmaschine gemäß den Figuren 1 und 3, gesehen in Richtung ihrer vertikalen Längsmittelebene.

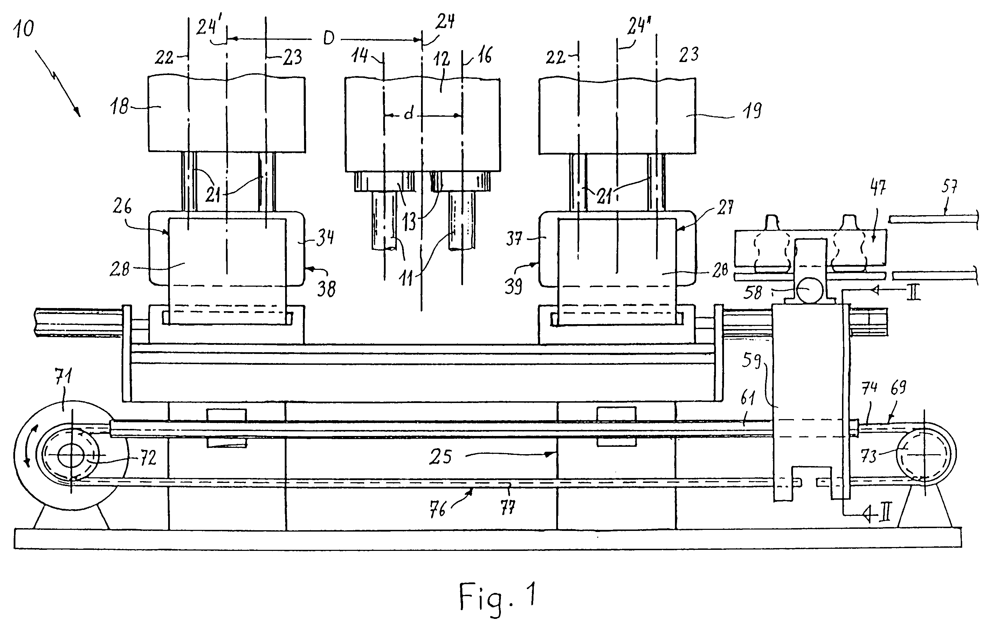

Die in der Figur 1, auf deren Einzelheiten ausdrücklich verwiesen sei, dargestellte, insgesamt mit 10 bezeichnete Blasformmaschine dient zur Herstellung von Flaschen-, Dosen- oder tubenförmigen Hohlkörpern, auch von Kanistern, aus den üblichen, hierfür geeigneten, thermoplastischen Kunststoffen, wie Polyaethylen (PE), Polypropylen (PP), Polyvynilchlorid (PVC), Polystyrol (PS) oder Polyamid (PA), um nur einige der gängigen Materialien repräsentativ zu nennen, die nach bekannten Blasverfahren verarbeitet werden können.

Hiernach wird das zum Fertigprodukt zu verarbeitende Kunststoffmaterial in thermisch-plastifiziertem Zustand als schlauchförmiger Kunststoff-Rohling 11 von einem insgesamt mit 12 bezeichneten Extruder bereitgestellt, der beim dargestellten, speziellen Ausführungsbeispiel zwei Extrusionsköpfe 13 hat, aus denen die Rohlinge 11 in bezüglich der zentralen Achsen 14 bzw. 16 der Extrusionsköpfe 13 koaxialer Anordnung senkrecht nach unten hängend austreten.

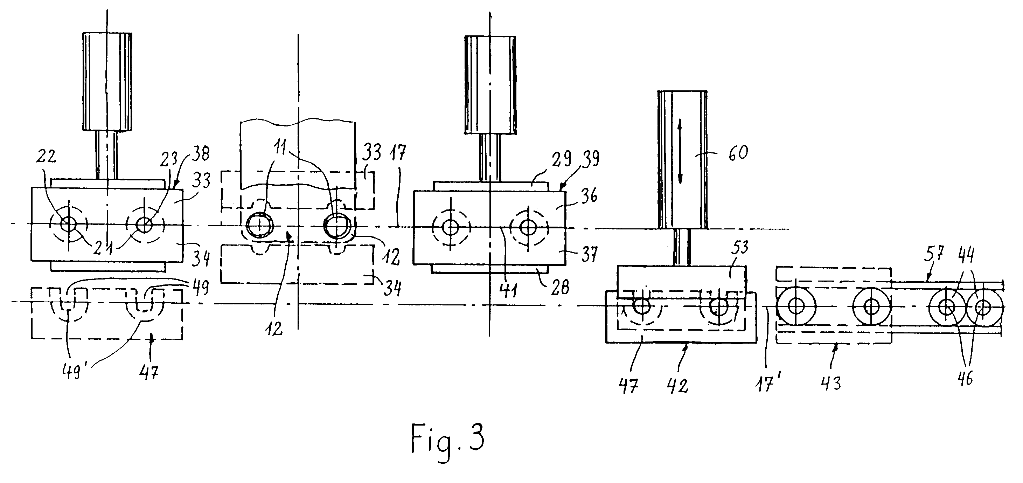

Entlang der durch die beiden zentralen Achsen 14 und 16 der beiden Extrusionsköpfe 13 des Extruders 12 markierten - vertikalen - Längsmittelebene 17 (Figur 3) gesehen, sind beidseits des Extruders 12 zwei Kalibrierstationen 18 und 19 angeordnet, welche ihrerseits je zwei Blasdorne 21 haben, deren - vertikal verlaufende - zentrale Achsen 22 und 23 Ebenen markieren, die parallel zu der Längsmittelebene 17 des Extruders 12 bzw. der Blasformmaschine 10 verlaufen. In "horizontaler" Richtung längs der Längsmittelebene 17 der Blasformmaschine 10 gesehen haben die Blasdorne 22 und 23 je einer der Kalibrierstationen 18 und 19 denselben Abstand d voneinander wie die zentralen Achsen 14 und 16 der Extrusionsköpfe 13. Der Extruder 12 hat von beiden kalibrierstationen 18 und 19 denselben Abstand D, gemessen entlang der Längsmittelebene 17 zwischen der rechtwinklig zu dieser verlaufenden Quermittelebene 24 des Extruders 12 und den dazu parallelen, mittig zwischen den Blasdornachsen 22 und 23 verlaufenden Quermittelebenen 24' und 24'' der beiden Kalibrierstationen 18 bzw. 19.

Der Extruder 12 und die beiden Kalibrierstationen 18 und 19 sind an einem lediglich schematisch angedeuteten, insgesamt mit 25 bezeichneten Maschinenengestell angeordnet, das auch die - ortsfeste - Basis für zwei Schließsysteme 26 und 27 bildet, die an dem Maschinengestell 25 in Richtung der Längsmittelebene 17 horizontal hin- und herverschiebbar angeordnet sind. Die Kalibrierstationen 18 und 19 rechtwinklig zur Längsmittelebene 17 der Blasformmaschine 10 hin- und herverschiebbar angeordnet. Der Extruder 12 ist gestellfest montiert.

In der Figur 3, auf deren Einzelheiten zur Erläuterung des Aufbaus und der Funktion der Blasformmaschine 10 ergänzend Bezug genommen sei, sind die Kalibrierstationen 18 und 19, der Einfachheit der Darstellung halber, lediglich durch die Querschnitte ihrer Blasdorne 21 und deren zentrale Achsen 22 und 23 repräsentiert, desgleichen der Extruder 12 durch die Querschnitte der Kunststoff-Rohlinge 11.

Jedes der beiden Schließsysteme 26 und 27 umfaßt zwei relativ zueinander verschiebbare Backen 28 und 29, an deren einander zugewandten Seiten die Formhälften 33 und 34 bzw. 36 und 37 zweier insgesamt mit 38 bzw. 39 bezeichneter Blasformen befestigt sind, in denen die herzustellenden Formkörper an der Kalibrierstation 18 bzw. der Kalibrierstation 19 geblasen werden.

Die Schließsysteme 26 und 27 sind in üblicher, nicht eigens dargestellter Weise auf Gleitblöcken montiert, die auf einer Führungsvorrichtung des Maschinengestells 25 parallel zu der Längsmittelebene 17 der Blasformmaschine 10 hin- und herverschiebbar angeordnet sind, um am Extruder Kunststoff-Rohlingabschnitte übernehmen und diese zu der jeweiligen Kalibrierstation 18 bzw. 19 transportieren zu können, wo die Formhohlkörper geblasen werden. Die diesbezüglichen Bewegungen der Blasformen 38 und 39 sowie der Schließsysteme 26 und 27 werden mittels hydraulischer Antriebszylinder gesteuert. Hierbei sind die zur Steuerung der Öffnungs- und Schließbewegungen der Blasformen 38 und 39 vorgesehenen Hydrozylinder als Linearzylinder ausgebildet, die mechanisch zwischen den Backen 28 und 29 des jeweiligen Schließsystems 26 bzw. 27 angreifen. Die mit diesen Hydrozylindern erzielbaren Relativbewegungen der Backen 28 und 29 der Schließsysteme 26 und 27 werden mit Hilfe von Getriebeelementen, z.B. Zahnstangen und Ritzeln, derart "symmetrisiert", daß die Blasformhälften 33 und 34 bzw. 36 und 37 der Blasformen 38 und 39, deren Schließspalte 41 im geschlossenen Zustand der Blasformen 38 und 39 in der vertikalen Längsmittelebene 17 der Blasformmaschine verlaufen, dem Betragen nach jeweils gleiche Auslenkungen bezüglich dieser Längsmittelebene 17, sowohl in Öffnungs- als auch in Schließrichtung erfahren.

Die Blasformmaschine 10 umfaßt weiter einen Satz von Nachbearbeitungsstationen, nämlich eine insgesamt mit 42 bezeichnete Entbutzungs- bzw. Stanz-Station sowie eine "nachgeordnete", insgesamt mit 43 bezeichnete Prüfstation, der bzw. denen noch weitere Nachbearbeitungsstationen folgen können, wobei diese Nachbearbeitungsstationen entlang einer parallel zur vertikalen Längsmittelebene 17 verlaufenden Ebene 17' angeordnet sind, entlang derer auch der Transport der Formhohlkörper 44 erfolgt, bis diese schließlich zu einer - nicht dargestellten - Entnahmestation gelangen.

Die Kalibrierstationen 18 und 19 sind, wie in der Figur 3 lediglich schematisch angedeutet und mehr in Einzelheiten der Figur 4 entnehmbar ist, rechtwinklig zur vertikalen Längsmittelebene 17 der Blasformmaschine 10 hin- und herverfahrbar, derart, daß die Formhohlkörper 44 dadurch bis in die Transportebene 17' gebracht werden können, d.h. soweit verschoben werden können, daß ihre zentralen Achsen 46 in der Transportebene 17' verlaufen. Entlang dieser Transportebene 17' verfahrbar angeordnet ist eine Transportmaske 47, mit der die an den Kalibrierstationen 18 und 19 geblasenen Formhohlkörper 44 mindestens zu der nachfolgend angeordneten Nachbearbeitungsstation, beim dargestellten, speziellen Ausführungsbeispiel der Stanzstation 42, gebracht werden können.

Diese Transportmaske 47 ist durch hydraulisch gesteuerte Verschiebung der jeweiligen Kalibrierstation 18 bzw. 19 beschickbar, wobei die Beschickung erfolgt, nachdem die Blasform 38 oder 39, in der die weiter zu bearbeitenden Formhohlkörper 44 fertig geblasen sind, schon geöffnet und unter den Extruder 12 zur Wiederaufnahme blasfähigen Materials gebracht worden ist. Die Transportmaske 47 ist als eine einem mittleren Abschnitt der jeweiligen Blasformhälfte 34 oder 37 der Blasformen 38 bzw. 39 auf einem mittleren Höhenabschnitt geometrisch ähnliche "Halbmaske" ausgebildet, die, wie beispielsweise der Figur 4 im einzelnen entnehmbar, sich flächig an eine Einschnürung 48 des Formhohlkörpers 44 - einer Flasche z.B. -anschmiegt, diesen Formhohlkörper 44 hierbei auf einem 180° Umfangsbereich umschließend und im übrigen zur Kalibrierstation 18 bzw. 19 hin U-förmig offen ausgebildet ist, derart, daß die seitlichen, geradlinig berandeten Bereiche der im wesentlichen U-förmigen Aufnahmeöffnungen 49 den gekrümmten Bereich 49' rechtwinklig zur Transportebene 17' verlaufend, gleichsam "tangential" fortsetzen. Schon allein hierdurch bleibt ein von der Transportmaske 47 aufgenommener Formhohlkörper in dieser gehalten, auch wenn er, z.B. aufgrund einer Erschütterung einer geringfügige seitliche, d.h. rechtwinklig zur Transportebene 17 gerichtete Verrückung erfährt.

Um die Formhohlkörper 44 sicher in der Transportmaske 47 zu halten, ist diese mit einem Unterdruck-Kanal 51 versehen, der über eine flexible Leitung 52 an die Saugseite einer nicht dargestellten Pumpe anschließbar ist und im zentralen Teil des gekrümmten Bereiches 49' in die jeweilige Aufnahmeöffnung 49 der Transportmaske 47 mündet. Dadurch kann der Formhohlkörper 44 sicher in Anlage mit dem gekrümmten Bereich 49 der Aufnahmeöffnung 49 der Transportmaske 47 gehalten werden, während diese in Transportrichtung verschoben wird.

Die Transportmaske 47 wird an der Stanzstation 42 als Widerlager für ein Stanzwerkzeug 53 ausgenutzt, mittels dessen Kunststoffüberstände am oberen Rand 54 des Flaschenhalses sowie am Boden 56 abgeschnitten bzw. weggestanzt werden können, wobei das Stanzwerkzeug 53 mittels eines pneumatischen Zylinders 60 - rechtwinklig zur Transportebene 17' hin- und herverschiebbar ist.

Beim dargestellten, speziellen Ausführungsbeispiel gemäß Figur 3 wird die Transportmaske 47 auch noch zum Weitertransport der an der Stanzstation 42 "entbutzten" Formhohlkörper 44 in eine nachfolgende Prüfstation ausgenutzt, an der beispielsweise die Dichtigkeit der Formhohlkörper 44 geprüft werden kann.

Der Weitertransport der solchermaßen nachbearbeiteten und geprüften Formhohlkörper 44 erfolgt auf einer Führungsschiene 57, wie an sich üblich.

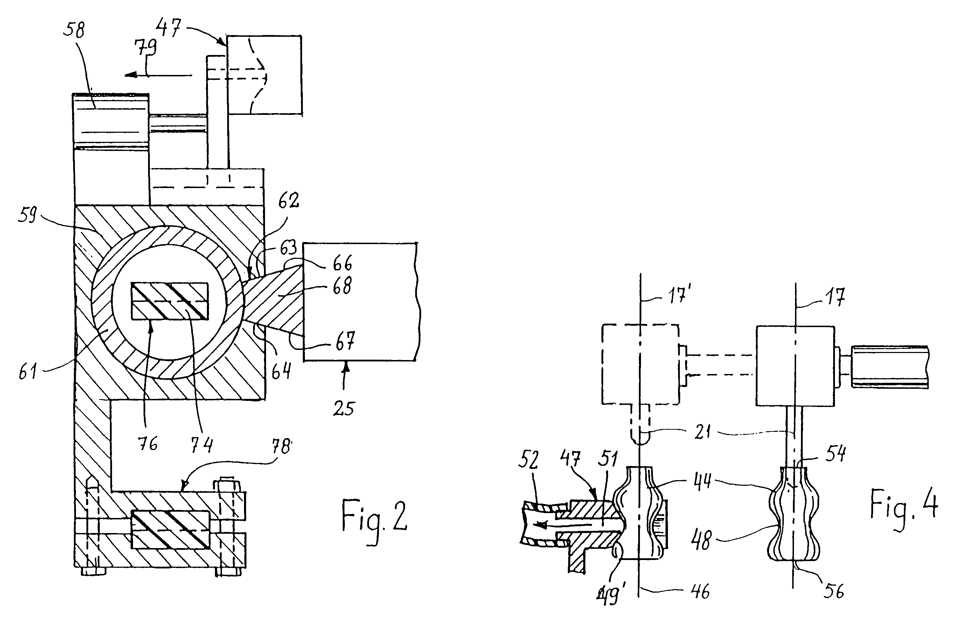

Um die Transportmaske außer Eingriff mit den in den Nachbearbeitungsstationen 42 und 43 sowie gegebenenfalls in der Führungsschiene 57 in der Transportebene 17' gehaltenen Formhohlkörper 44 bringen zu können, ist die Transportmaske ihrerseits mittels eines pneumatischen Antriebszylinders 58 (Figur 2) quer zur Transportebene 17', von der Längsmittelebene 17 der Blasformmaschine 10 aus gesehen von der Transportebene 17' weg und zu dieser hin bewegbar.

Die Transportmaske 47 und der zu ihrer Verrückung rechtwinklig zur Transportebene 17 vorgesehene pneumatische Antriebszylinder 58 sind auf einem Führungsblock 59 montiert, der auf einem parallel zur Transportebene 17' - horizontal - verlaufenden, maschinengestellfest angeordneten Rohr 61 gleitend verschiebbar geführt ist und an seiner dem Maschinengestell 25 zugewandten Seite mit einem Schlitz 62 versehen ist, dessen Längsränder 63 und 64 gleitend an seitlichen Längsflächen 66 und 67 eines mit dem Maschinengestell 25 fest verbundenen prismatischen Führungskörpers 68 anliegt, der seinerseits fest mit dem Führungsrohr 61 verbunden ist. Durch die formschlüssige Anlage der Schlitzwangen 63 und 64 an den Führungsflächen 66 und 67 des prismatischen Führungskörpers 68 wird die Verdrehsicherung der Transportmaske 47 erreicht. Als Längsantrieb, mittels dessen die Transportmaske 47 entlang der Transportebene 17' hin- und herverschiebbar ist, ist ein insgesamt mit 69 bezeichneter, mittels eines Elektromotors 61, z.B. eines AC-Motors antreibbarer Zahnriementrieb vorgesehen, dessen mit der Motorwelle drehfest verbundenes Antriebszahnrad 72 und dessen Umlenkzahnrad 73, wie der Figur 1 entnehmbar, außerhalb des Bewegungsbereiches der Transportmaske 47 angeordnet sind. Das obere Trum 74 des Zahnriemens 76 des Zahnriementriebes 69 ist durch das Führungsrohr 61 verlaufend geführt. Das untere Trum 77 ist mit dem Führungsblock 59 über ein gemäß der Darstellung der Figur 2 L-förmiges Klemmelement 78, das gleichzeitig das Zahnriemenschloß bildet, verschiebefest verbunden.

Eine mögliche Betriebsart der Blasformmaschine 10 wird nachfolgend anhand eines typischen Arbeitsspiels, das selbsttätig gesteuert periodisch wiederholbar ist, näher erläutert:
In den in ausgezogenen Linien dargestellten Positionen der Blasformen 38 und 39 sowie der Transportmaske 47 wird an beiden Kalibrierstationen 18 und 19 geblasen, während in der Stanzstation 42 die zuvor in der gemäß den Figuren 1 und 3 "rechten" Kalibrierstation 19 geblasenen Formhohlkörper 44 der "entbutzenden" Stanzbearbeitung ausgesetzt sind. Nach dem Abschluß des Stanzvorganges, der nur wenige Zehntel-Sekunden beansprucht und gegebenenfalls Weitertransport der "entbutzten" Formhohlkörper 44 in die der Stanzstation 42 nachgeschaltete Prüfstation 43 wird die Transportmaske 47 durch Druck-beaufschlagung des pneumatischen Zylinders 58 (Figur 2) in Richtung des Pfeils 79 aus ihrer Eingriffstellung mit den solchermaßen transportierten Formhohlkörpern 44 ausgerückt und durch "Rückwärts"-Ansteuerung des Elektromotors 71 mittels des Zahnriementriebes 69 in ihre der linken Kalibrierstation 18 gegenüberliegende, in der Figur 3 gestrichelt eingezeichnete Funktionsstellung I gebracht, wobei der pneumatische Antriebszylinder 58, während sich die Transportmaske 47 in Richtung auf diese Ausgangsstellung I zu bewegt, schon dahingehend druckbeaufschlagt ist, daß die Transportmaske 47 wieder in ihre der Kalibrierstation 18 nähergerückte Aufnahmeposition gebracht wird, in der sie die an der Kalibrierstation 18 geblasenen Formhohlkörper 44 in einer Position derselben aufnehmen kann, in der die zentralen Achsen 46 der Formhohlkörper 44 in der Längsmittelebene 17 der Blasformmaschine 10 verlaufen. Sobald der in diesem Fall an der Kalibrierstation 18 schon weiter fortgeschrittene Blasvorgang als der an der anderen Kalibrierstation 19 noch stattfindende Blasvorgang abgeschlossen ist, öffnet die an der Kalibrierstation 18 angeordnete Blasform 38 und fährt im geöffneten Zustand in die - gestrichelt eingezeichnete - Position unterhalb des Extruders 12, um die dort inzwischen hinreichend weit extrudierten schlauchförmigen Kunststoff-Rohlinge 11 aufzunehmen. Gleichzeitig hiermit werden die an den Blasdornen 21 der Kalibrierstation 18 noch hängenden Formhohlkörper 44 durch Verschiebung dieser Kalibrierstation 18 auf die Transportebene 17' zu in die Transportmaske 47 eingefahren und unmittelbar daran anschließend die Blasdorne 21 der Kalibrierstation 18 angehoben und dadurch die FormHohlkörper 44 an die Transportmaske übergeben die durch den einseitig vorhandenen Unterdruck in der Transportmaske sicher gehalten werden.

Hierauf wird die Kalibrierstation 18 sofort wieder in ihre für den Blasvorgang vorgesehene Grundstellung zurückgefahren, in der die zentralen Achsen 22 und 23 der Blasdorne 21 in der Längsmittelebene 17 der Blasformmaschine 10 verlaufen.

Gleichzeitig hiermit wird die Transportmaske 47 - durch Aktivierung des Riementriebes 69 in "Vorwärtsrichtung" in ihre für die Stanzbearbeitung dem Formhohlkörper 44 in der Stanzstation 42 vorgesehene Position gefahren. Während dieser Transportbewegung der Transportmaske 47 fährt die unter dem Extruder 12 geschlossene Blasform 38 in ihre für den Blasvorgang geeignete Position unter die Kalibriervorrichtung 18, wonach an dieser unmittelbar der Kalibrier- und Blasvorgang einsetzt. Nach der nur kurz dauernden Stanzbearbeitung der zuvor an der linken Kalibrierstation 18 geblasenen Formhohlkörper und gegebenenfalls Weitertransport derselben zu der Prüfstation 43 und Ausrücken der Transportmaske 47 aus ihrer Eingriffstellung mit den fertigen Formhohlkörpern 44 wird diese nun in ihre der rechten Kalibrierstation 19 gegenüberliegende Funktionsstellung II gebracht, die der Funktionsstellung I bezüglich der Kalibrierstation 18 analog ist.

Diese Position muß im Sinne eines möglichst raschen Arbeitstaktes der Blasformmaschine 10 spätestens dann erreicht sein, wenn die Kalibrierstation 19 auf die Transportmaske 47 zu bewegt werden kann, was wiederum frühestens der Fall ist, wenn die dieser Kalibrierstation 19 zugeordnete Blasform 39 - im geöffneten Zustand - ihre Aufnahmeposition unterhalb des Extruders 12 erreicht hat. Nach der Beschickung der Transportmaske 47 mit den zuvor an der rechten Kalibrierstation 19 geblasenen Formhohlkörpern, die analog zur Beschickung der Transportmaske 47 an der anderen Kalibrierstation 18 erfolgt, führt nunmehr die Transportmaske 47 ihren Transporthub bis in die Stanzstation 42 aus, wo nunmehr wieder der Stanzvorgang durchgeführt wird und insoweit der Arbeitszyklus die für den Beginn seiner Schilderung als ablaufend angenommene Phase wieder erreicht hat. Durch periodische Wiederholung der solchermaßen ablaufenden Arbeitszyklen ist eine effektive Serienfertigung der Formhohlkörper 44 möglich, die mit kürzesten Zykluszeiten realisierbar ist, da gleichzeitig mehrere Transportvorgänge ablaufen können, während an den Kalibrierstationen 18 und 19 geblasen wird.

Die Taktfolgefrequenz ist praktisch auf die durch die physikalischen Randbedingungen bedingten Zeiten begrenzt, die zum Extrudieren der schlauchförmigen Kunststoff-Rohlinge 11 und zu deren unabdingbarer Abkühlung an den Kalibrierstationen 18 und 19 benötigt wird. Durch die Transportvorgänge 11 entsteht dabei keinerlei Zeitverlust.

## Patentansprüche

1. Blasformmaschine mit zwei Kalibrierstationen zwischen denen ein Extruder angeordnet ist, der schlauchförmige Kunststoff-Rohlinge erzeugt, die in alternierender Folge von Blasformen aufgenommen werden und in diesen an den Kalibrierstationen in periodischem Takt zu Formhohlkörpern geblasen werden, wobei die Kalibrierstationen und der Extruder entlang einer vertikalen Längsmittelebene angeordnet sind, entlang welcher die Blasformen zwischen ihrer Blasstation und dem Extruder zur Beschickung mit den Kunststoff-Rohlingen hin- und verfahrbar sind, mit mindestens einer Nachbearbeitungsstation, an der die geblasenen Formhohlkörper einer Nachbearbeitung unterworfen werden und mit einer Transportvorrichtung mittels derer die an den Kalibrierstationen geblasenen Formhohlkörper im Takt der Blaszyklen zu der Nachbearbeitungsstation transportierbar sind,
**dadurch gekennzeichnet**, daß
die Transportvorrichtung als eine entlang einer in seitlichem Abstand von der Längsmittelebene (17) der Blasformmaschine (10) und parallel zu dieser Längsmittelebene (17) verlaufenden Transportebene (17') hin- und herverfahrbar Transportmaske (47) ausgebildet ist, die zur Aufnahme der Formhohlkörper (44), die an den Kalibrierstationen (18 bzw. 19) geblasen worden sind, alternierend in diesen gegenüberliegende Aufnahmepositionen (I bzw. II) bringbar ist und von diesen Positionen aus zu der Nachbearbeitungsstation (42) transportierbar ist, die, in Transportrichtung gesehen, auf eine der Kalibrierstationen (18 oder 19) folgend, dieser benachbart angeordnet ist, wobei die Transportmaske (47) als eine in der Art einer Blasformhälfte gestaltete Halbmaske ausgebildet ist, die mindestens eine zu den Kalibrierstationen (18 und 19) hin offene Aufnahmeöffnung (49) hat, in der ein eingebrachter Formhohlkörper (44) durch formschlüssigen Eingriff des Öffnungsrandes mit Vorsprüngen oder Einschnürungen (48) des Hohlkörpers (44) vertikal abgestützt und gegen ein Herausfallen aus der Transportmaske (47) gesichert ist, und daß die, die Blasdorne (21) auf- und abverfahrbar tragendenKalibrierstationen (18 und 19) zur Beschickung der Transportmaske (47) mit den an der jeweiligen Kalibrierstation (18 bzw. 19) geblasenen Formhohlkorpern (44) rechtwinklig zur Längsmittelebene (17) der Blasformmaschine (10) verfahrbar ausgebildet sind.

2. Blasformmaschine nach Anspruch 1,
**dadurch gekennzeichnet**, daß
die Nachbearbeitungsstation(en) (42 und/oder 43) entlang der Transportebene (17') angeordnet ist/sind.

3. Blasformmaschine nach Anspruch 1 oder Anspruch 2,
**dadurch gekennzeichnet**, daß
die erste Nachbearbeitungsstation (42) eine Stanz- und/oder Entbutzungsstation ist.

4. Blasformmaschine nach Anspruch 3,
**dadurch gekennzeichnet,** daß
die Transportmaske (47) als ein die der Stanzbearbeitung unterworfenen Formhohlkörper (44) während des Stanzvorganges in Position haltendes Widerlager ausgenutzt ist.

5. Blasformmaschine nach Anspruch 3 oder Anspruch 4,
**dadurch gekennzeichnet,** daß
die Transportmaske (47) auch für den Weitertransport der Formhohlkörper (44) von der Stanzstation (42) zu einer auf diese folgenden, weiteren Nachbearbeitungs- oder Prüfstationen ausgenutzt ist.

6. Blasformmaschine nach einem der Ansprüche 1 bis 5,
**dadurch gekennzeichnet,** daß
die zu den Kalibrierstationen (18 und 19) hin offene(n) Aufnahmeöffnung(en) (49) der Grundform nach U-förmig ausgebildet ist/sind, wobei ihre Ränder einen zum Verlauf der Außenkontur der aufzunehmenden Formhohlkörper (44) komplementären Konturenverlauf haben und an einen inneren, gekrümmt verlaufenden Randabschnitt (49') der Aufnahmeöffnungen (49) anschließende, parallel zueinander und rechtwinklig zur Längsmittelebene (17) der Blasformmaschine (10) verlaufende Schenkelabschnitte haben, und daß ein Antrieb (58) vorgesehen ist, mittels dessen die Transportmaske (47) zum Ausrücken aus ihrer Eingriffsstellung mit den transportierten Formhohlkörpern (44) rechtwinklig zur Transportebene (17') verschiebbar ist.

7. Blasformmaschine nach Anspruch 6,
**dadurch gekennzeichnet**, daß
als Antrieb (58) für die Querbewegung der Transportmaske ein doppelt wirkender pneumatischer Linearzylinder vorgesehen ist, der die Längsbewegungen der Transportmaske (47) mit ausführt.

8. Blasformmaschine nach Anspruch 6 oder Anspruch 7,
**dadurch gekennzeichnet**, daß
der die quer zur Transportebene (17') erfolgenden Verrückungen der Transportmaske (47) vermittelnde Antrieb (58) auf einem in Transportrichtung, d.h. parallel zur Transportebene (17') geführt verschiebbar am Maschinengestell (25) gelagerten Führungsblock (59) montiert ist, an dem die Transportmaske (47) quer zur Transportebene (17') geführt verschiebbar gelagert ist.

9. Blasformmaschine nach Anspruch 8,
**dadurch gekennzeichnet**, daß
als gestellfestes Führungselement für den Führungsblock (59) ein über einen prismatischen Führungskörper (68) mit dem Maschinengestell (25) fest verbundenes Führungsrohr (61) vorgesehen ist, auf dem der Führungsblock (59) gleitend verschiebbar angeordnet ist, wobei der Führungsblock (59) mit einem Längsschlitz (62) versehen ist, dessen Schlitzwangen (63 und 64) an den einander gegenüberliegenden, freien Längsflächen (66 und 67) des prismatischen Führungskörpers (68) abgestützt sind.

10. Blasformmaschine nach Anspruch 9,
**dadurch gekennzeichnet**, daß
als Antrieb für die parallel zur Transportebene (17') verlaufenden Bewegungen der Transportmaske (47) ein mittels eines Elektromotors (71) mit umkehrbarer Drehrichtung antreibbarer Zahnriementrieb (69) vorgesehen ist, der mindestens ein parallel zu dem Führungsrohr (61) verlaufendes, freies Trum (77) hat, das fest mit dem die Transportmaske (47) tragenden Führungsblock (59) verbunden ist.

11. Blasformmaschine nach Anspruch 10,
**dadurch gekennzeichnet**, daß
die durch den Verlauf des Zahnriemens (76) markierte Ebene parallel zu der vertikalen Längsmittelebene (17) der Blasformmaschine (10) verläuft, daß das obere Trum (74) des Zahnriemens (76) durch das Führungsrohr (61) hindurch verläuft, und daß der Führungsblock (61) mittels eines als Riemenschloß ausgenutzten Klemmelements (78) mit dem unteren - freien - Trum (77) des Zahnriemens (76) verbunden ist.

12. Blasformmaschine nach einem der Ansprüche 6 bis 11,
**dadurch gekennzeichnet**, daß
die Aufnahmeöffnung(en) (49) der Transportmaske (47) in einem den/die aufgenommenen Formhohlkörper (44) umschließenden und sich an diesen anschmiegenden Bereich (49') ihres jeweiligen Randes mit einem in die jeweilige Öffnung (49) mündenden, an eine Unterdruckquelle anschließbaren Saugkanal (51) versehen sind.

## Claims

1. A blow moulding machine comprising two calibration stations and an extuder arranged therebetween, producing hose-shaped parisons which are taken up by mold forms in alternating sequence and blown up in these mold forms into hollow bodies, in a periodical sequence at the calibration stations, said calibration stations and extruder being arranged along a vertical longitudinal central plane along which the mold forms to the object of being loaded with the plastic parisons are displaceable back and forth between their associated calibration stations and the extruder, and comprising at least one post-processing station at which the blown hollow bodies are subjected to a post-processing, and further comprising a transport device by means of which the hollow bodies blown at the calibration stations can be transported to the post processing station in the sequence as timed by the blow cycles,
charactesized in that the transport device is designed as a transport-mask (47) which is displaceable back and forth along a transport plane (17') extending in lateral distance from the longitudinal central plane (17) of the blow molding machine (10) and parallel thereto, and which to the object of taking up the hollow molded bodies blown at the calibration stations (18) and (19), respectively, is alternatingly moveable into acceptance positions (I and II) opposite to the said calibration stations (18) and (19) and, starting from these positions, transportable to the post-processing station (42) which as seen in the direction of transportation is arranged following one of the calibration stations (18) or (19) and in vicinity thereto, said transport mask being designed in the manner of a blow mold half as a half-mask having at least one acceptance aperture (49) which is orientated to the calibration stations and within which a hollow molded body (44) introduced therein is vertically supported and secured to prevent falling out from the transport mask (47) by fully formed engagement of the contour of the aperture with protrusions or form reductions (48) of the hollow molded body (44), and in that the calibration stations (18) and (19) carrying the blow mandrels (21) in an upwards and downwards moveable manner, are construed to be moveable in the direction at right angles to the longitudinal central plane of the blow molding machine (10), for the object of supplying the hollow molded bodies blown up at the calibration stations (18 and 19, respectively) to the transport mask (47).

2. Blow molding machine according to claim 1, characterized in that the post processing stations(s) (42) and/or (43) is/are arranged along the transport plane (17').

3. Blow molding machine according to claim 1 or claim 2, characterized in that the first post processing station (42) is a stamping station and/or a station for removing the bulb.

4. Blow molding machine according to claim 3, characterized in that the transport mask (47) is used as an abutment member by which during a stamping process the hollow molded body (44) subjected to the stamping process is held in position.

5. Blow molding machine according to claim 3 or claim 4, characterized in that the transport-mask (47) is also used for the subsequent transport of the hollow molded body (44) from the stamping station (42) to a thereto subsequently arranged further post-processing or inspection station.

6. Blow molding machine according to one of claims 1 to 5, characterized in that the acceptance aperture(s) (49) orientated to the calibration stations (18) and (19) has/have a U-shaped basic form, their borders having a contour which is complementary to the outer contour of the hollow molded bodies (44) to be accepted, and having leg portions extending parallel with respect to one another and at right angles with respect to the longitudinal central plane (17) of the blow molding machine (10) and abutting to an inner curved shaped border portion (49') of the acceptance apertures (49), and in that a drive device (58) is provided by means of which, for the object of retracting the transport-mask (47) from its position of engagement with the transported hollow molded bodies (44), the transport-mask (47) is displaceable at right angels with respect to the transport plane (17').

7. Blow molding machine according to claim 6, characterized in that the drive unit (58) for the lateral movement of the transport mask is a double acting linear pneumatic cylinder following the longitudinal movement of the transport mask (47).

8. Blow molding machine according to claim 6 or 7, characterized in that the drive unit (58) which is providing for the displacements of the transport mask (47) occurring square to the transport plane (17') is mounted on a guide block (59) which, viewed in the direction of transport, i.e. parallel to the transport plane (17') is displaceably guided at the machine bed, and at which the transport-mask (47) is carried displaceably guided square with respect to the transport plane (17').

9. Blow molding machine according to claim 8, characterized in that a guide tube (61) is provided which is fixed to the machine bed (25) by means of a prismatic guide body (68) and forming a guide element solid with the machine bed (25) for the guide block (59) slidably displaceable arranged thereon, said guide block (59) being provided with a longitudinal slot (65), the longitudinal faces (63) and (64) of which are supported by the opposing free longitudinal guide surfaces (66) and (67) of the prismatic guide body (68).

10. Blow molding machine according to claim 9, characterized in that as a drive means for the movements of the transport-mask (47) occurring parallel to the transport plane (17') a toothed belt drive (69) with an electric drive motor (71) with reversible drive direction is provided which has at least one free trunk (77) which is fixed to the guide block (59) carrying the transport-mask (47) and extending parallel to the guide tube (61).

11. Blow molding machine according to claim 10, characterized in that the plane which is defined by the course of the toothed belt (76) is extending parallel to the vertical longitudinal central plane (17) of the blow molding machine (10), in that the upper trunk (74) of the toothed belt (76) is extending through the guide tube (61), and in that the guide block (59) is connected to the lower free trunk (77) of the toothed belt (76) by means of a clamping element (78) which is used as the belt joint.

12. Blow molding machine according to one of the claims 1 to 11, characterized in that the acceptance aperture(s) (49) of the transport mask (47) is/are provided with a vacuum channel (51) which is connected to a vacuum source and which is communicating with the respective aprerture (49) within a range (49') of the respective aperture border which is surrounding the accepted hollow molded body and adapting thereto.

## Revendications

1. Machine à souffler avec deux postes de calibrage entre lesquels est installée une extrudeuse qui produit des ébauches de matière plastique de forme tubulaire reçues alternativement par des moules de soufflage dans lesquels elles sont soufflées périodiquement dans les postes de calibrage, de manière à former des corps creux moulés, les postes de calibrage et l'extrudeuse étant disposés le long d'un plan médian longitudinal vertical le long duquel les moules de soufflage peuvent être déplacés dans les deux sens entre leur poste de calibrage et l'extrudeuse pour l'alimentation en ébauches de matière plastique, comprenant au moins un poste de finissage dans lequel les corps creux moulés sont soumis à un finissage, et un dispositif de transport à l'aide duquel les corps creux moulés soufflés dans les postes de calibrage peuvent être transportés, au rythme des cycles de soufflage, vers le poste de finissage, **caractérisée en ce** que le dispositif de transport est réalisé sous la forme d'un masque de transport (47) qui peut être déplacé dans les deux sens dans un plan de transport (17') s'étendant à distance latérale le long d'un plan médian longitudinal (17) de la machine à souffler (10) et parallèlement audit plan médian longitudinal (17) et qui, pour la réception des corps creux moulés (44) soufflés respectivement dans les postes de calibrage (18 et respectivement 19), peut être amené alternativement à des positions de réception (I et respectivement II) situées en face desdits postes de calibrage, et transporté, depuis ces positions, vers le poste de finissage (42) lequel, vu dans la direction de transport, est disposé en aval et au voisinage de l'un des postes de calibrage (18 ou 19), le masque de transport (47) étant réalisé sous la forme d'un demi-masque conformé à la manière d'un demi-moule de soufflage pourvu d'au moins une ouverture de réception (49) ouverte en direction des postes de calibrage (18 et 19), dans laquelle un corps creux moulé (44) introduit est maintenu verticalement, par engagement positif du bord de l'ouverture avec des saillies ou des retraits (48) du corps creux (44), et protégé contre une chute hors du masque de transport (47), et que les postes de calibrage (18 et 19) qui portent les poinçons de soufflage (21) mobiles dans les sens ascendant et descendant, peuvent être déplacés perpendiculairement au plan médian longitudinal (17) de la machine à souffler (10) pour alimenter le masque de transport (47) avec les corps creux moulés (44) soufflés dans le poste de calibrage (18 ou 19) respectif.

2. Machine à souffler selon la revendication 1, caractérisée en ce que le (les) poste(s) de finissage (42 et/ou 43) est (sont) disposé(s) le long du plan de transport (17').

3. Machine à souffler selon l'une des revendications 1 ou 2, caractérisée en ce que le premier poste de finissage (42) est un poste de découpage et/ou d'élimination des déchets de rond de verre.

4. Machine à souffler selon la revendication 3, caractérisée en ce que le masque de transport (47) est utilisé comme une butée qui maintient les corps creux moulés (44) soumis au découpage en position pendant le processus de découpage.

5. Machine à souffler selon l'une des revendications 3 ou 4, caractérisée en ce que le masque de transport (47) est également utilisé pour l'acheminement des corps creux moulés (44) depuis le poste de découpage (42) jusqu'à un autre poste de finissage ou de contrôle monté en aval de ce dernier.

6. Machine à souffler selon l'une des revendications 1 à 5, caractérisée en ce que la ou les ouverture(s) de réception (49) ouverte(s) en direction des postes de calibrage (18 et 19) présente(nt) fondamentalement une forme en U, le contour de leur(s) bord(s) étant complémentaire au contour extérieur des corps creux moulés (44) à recevoir, et à une section du bord intérieur courbe (49') des ouvertures de réception (49) étant raccordées des sections de branches parallèles orientées perpendiculairement au plan médian longitudinal (17) de la machine à souffler (10), et qu'il est prévu un mécanisme d'entraînement (58) à l'aide duquel le masque de transport (47) peut être déplacé perpendiculairement au plan de transport (17') pour le dégager de sa position de contact avec les corps creux moulés (44) transportés.

7. Machine à souffler selon la revendication 6, caractérisée en ce qu'elle comprend comme mécanisme d'entraînement (58) pour le déplacement transversal du masque de transport, un cylindre pneumatique linéaire à double effet qui suit les mouvements longitudinaux du masque de transport (47).

8. Machine à souffler selon l'une des revendications 6 ou 7, caractérisée en ce que le mécanisme d'entraînement (58) générant les déplacements du masque de transport (47) transversalement au plan de transport (17') est monté sur le bâti de machine (25), sur un bloc de guidage (59) mobile dans la direction de transport, c'est-à-dire parallèlement au plan de transport (17'), sur lequel le masque de transport (47) peut coulisser transversalement au plan de transport (17').

9. Machine à souffler selon la revendication 8, caractérisée en ce qu'elle comprend comme élément de guidage pour le bloc de guidage (59), solidaire du bâti, un tube de guidage (61) solidarisé avec le bâti de machine (25) par l'intermédiaire d'un corps de guidage prismatique (68), sur lequel peut coulisser le bloc de guidage (59), ledit bloc de guidage (59) présentant une fente longitudinale (62) dont les faces latérales (63 et 64) prennent appui sur les surfaces longitudinales libres (66 et 67) opposées du corps de guidage prismatique (68).

10. Machine à souffler selon la revendication 9, caractérisée en ce qu'elle comprend comme mécanisme d'entraînement pour les mouvements du masque de transport (47) parallèlement au plan de transport (17'), une transmission à courroie dentée (69) qui peut être entraînée au moyen d'un moteur électrique (71) avec une direction de rotation réversible, et qui comporte au moins un brin libre (77) orienté parallèlement au tube de guidage (61) et solidaire du bloc de guidage (59) portant le masque de transport (47).

11. Machine à souffler selon la revendication 10, caractérisée en ce que le plan marqué par l'extension de la courroie dentée (76) s'étend parallèlement au plan médian longitudinal (17) de la machine à souffler (10), que le brin supérieur (74) de la courroie dentée (76) s'étend au travers du tube de guidage (61), et que le bloc de guidage (61) est couplé avec le brin libre (77) - inférieur - de la courroie dentée (76) au moyen d'un élément de serrage (78) utilisé comme attache de courroie.

12. Machine à souffler selon l'une des revendications 6 à 11, caractérisée en ce que la (les) ouverture(s) de réception (49) du masque de transport (47) est (sont) munie(s), dans une partie (49') de leur bord respectif entourant le(s) corps creux moulé(s) (44) introduit(s) et épousant la forme de celui-ci (ceux-ci), d'un canal d'aspiration (51) qui débouche dans l'ouverture (49) considérée et peut être raccordé à une source de dépression.
